# EUROPÄISCHE PATENTSCHRIFT

(11) **EP 0 813 052 B1**
(45) Veröffentlichungstag und Bekanntmachung des Hinweises auf die Patenterteilung: **07.09.2011**
(21) Anmeldenummer: 97107173.3
(22) Anmeldetag: 30.04.1997
(51) Int. Cl.: G01N 15/02, G01N 21/47, G01N 21/85

(54) **Vorrichtung zur Messung von Partikelabmessungen in Fluiden**
Apparatus for measuring particle size in fluids
Appareil pour la mesure des dimensions de paricules dans des fluides

(30) Priorität: 10.06.1996 DE 19623095
(43) Veröffentlichungstag der Anmeldung: 17.12.1997
(73) Patentinhaber: Schwartz, Margit, 40489 Düsseldorf (DE); Schwartz, Friedel Herbert, 40489 Düsseldorf (DE)
(72) Erfinder: Daniels, Rolf Prof. Dr., 38106 Braunschweig (DE); Karworth, Roland Dr., D-06366 Köthen (DE); Gerber, Meinolf Dipl.-Ing., D-40235 Düsseldorf (DE); Braun, Michael, D-40489 Düsseldorf (DE)
(74) Vertreter: Lenzing Gerber Stute

(56) Entgegenhaltungen:
- EP-A- 0 289 200
- WO-A-95/31711
- DE-A- 2 626 292
- FR-A- 1 418 260

## Beschreibung

Die vorliegende Erfindung betrifft eine Vorrichtung zum Analysieren von Partikelabmessungen in einem Fluid enthaltener Partikel mit den Merkmalen des Oberbegriffs des Anspruchs 1.

Eine gattungsgemäße Analysevorrichtung ist beispielsweise aus der EP 0 289 200 B1 bekannt. Die bekannte Vorrichtung umfaßt eine in das Fluid einzutauchende, rohrförmige Sonde, an deren Stirnseite ein optisch durchlässiges Fenster vorgesehen ist. Im Innern der Sonde ist eine Optik vorgesehen, die einen Laserstrahl fokussiert und durch das Fenster aus der Sonde austreten läßt. Der Brennpunkt des Laserstrahls liegt dann innerhalb des die Sonde umgebenden Fluids. Hier werden die in dem Fluid enthaltenen Partikel beleuchtet und das rückgestreute Licht tritt wiederum durch das Fenster in die Sonde ein, wo es aufgenommen und nach Zeit und Intensität gemessen wird.

Um von der Eigengeschwindigkeit der Partikel unabhängig zu sein, rotiert ein Teil der Optik in der Weise, daß der fokussierte Laserstrahl um die Mittenachse der Sonde herumwandert, so daß der Brennpunkt des Laserstrahls in dem Fluid einen Kreis beschreibt. Hierbei werden auf der kreisförmigen Bahn des Brennpunktes in dem Fluid die dort vorhandenen Partikel abgetastet.

Anwendungsbeispiele für derartige Analysevorrichtungen sind z.B. die Prozeßsteuerung über das Kristallwachstum in Lösungen oder die Bestimmung von Staubgehalten von Gasen. Insbesondere in der Prozeßsteuerung liegen an der Sonde strömende, korrosive oder abrasive Medien an, die zum großen Teil auch noch giftig sind.

Bei bekannten Analysevorrichtungen besteht das Problem, daß die in das Fluid eingetauchte Sonde lediglich ein optisches Fenster aufweist, das das Fluid von der im Sondeninnern befindlichen Optik trennt. Falls dieses Fenster undicht wird, wird umgehend das Sondeninnere geflutet und die Sonde dadurch unbrauchbar.

Es ist daher Aufgabe der vorliegenden Erfindung, eine Vorrichtung zum Analysieren von Partikelabmessungen in einem Fluid enthaltener Partikel bereitzustellen, die im Betrieb sicherer ist.

Diese Aufgabe wird von einer Vorrichtung mit den Merkmalen des Anspruchs 1 gelöst.

Weil das optische System wenigstens zwei hintereinander angeordnete, für das Licht durchlässige Fenster umfaßt, die jeweils fluiddicht in das Gehäuse der Sonde eingesetzt sind, kann nach einer Undichtigkeit, die an dem fluidseitigen Fenster aufgetreten ist, bereits ein Warnsignal abgegeben werden, bevor das Sondeninnere beschädigt oder sogar das Fluid durch den Sensor an die Umgebung abgegeben wird.

Dabei ist zwischen den Fenstern ein Zwischenraum vorgesehen, weil bereits das Fluten dieses Zwischenraums zu einer Änderung der optischen Eigenschaften der Fenster führt, die als Warnsignal für eine Undichtigkeit des äußeren Fensters ausgewertet werden können. Darüber hinaus ist vorteilhaft, wenn in dem Zwischenraum ein Sensor für das Fluid angeordnet ist, so daß z.B. das Eindringen von bestimmten Gasen in den Zwischenraum erfaßt werden kann, die nicht über eine Änderung der optischen Eigenschaften detektiert werden können.

Eine besonders vorteilhafte Ausführungsform der Erfindung ergibt sich, wenn zumindest die fluidseitige Oberfläche des fluidseitigen Fensters konvex ist. In diesem Falle kann der neben der Mittenachse der Sonde austretende Lichtstrahl durch den von der äußeren, konvexen Oberfläche des fluidseitigen Fensters hervorgerufenen Astigmatismus in einer besonderen Weise auf einen Fokusbereich abgebildet werden. Außerdem verändern sich die optischen Eigenschaften des gesamten Systems bei Flutung des Zwischenraums mit einer Flüssigkeit so sehr, daß bereits die Änderung des Meßsignals als Signal für einen Defekt in der Abdichtung dienen kann. Die konvexe, dem Fluid zugewandte Oberfläche bewirkt außerdem eine Verbesserung der Strömung, die an der Oberfläche anliegt. So ist die Standzeit der optischen Oberfläche bei in dem Fluid enthaltenen abrasiven Partikeln zu vergrößern.

Eine besonders gleichmäßige Strahlintensität über einen gewissen Tiefenbereich ist zu erreichen, wenn der Fokusbereich zu den Hauptebenen des Strahls im wesentlichen spiegelsymmetrisch ist und in jeder Ebene eine etwa hyperbelförmige Erzeugende aufweist. Eine nahezu konstante Intensität kann erreicht werden, wenn die Orte des geringsten Querschnitts in den Hauptebenen des Strahls in der Längsrichtung des Strahls gegeneinander verschoben sind. Dabei ist vorteilhaft, wenn der Fokusbereich zwischen den Stellen des geringsten Querschnitts eine annähernd konstante Lichtintensität aufweist.

Eine gute Erfassung des von den Partikeln zurückgestreuten Lichts ergibt sich, wenn die Auswerteeinheit die Intensität und den zeitlichen Verlauf der Signale, die das zurückgestreute Licht erzeugt, erfaßt. Es kann zur Auswertung der von den Partikeln erzeugten Signale vorteilhaft sein, wenn die bei dem Eintreten eines Partikels in den Strahl und/oder bei dem Austreten des Partikels aus dem Strahl erfaßte Flanke des Signals nach der Zeit abgeleitet werden und der die Flankensteilheit des Signals darstellende Betrag wenigstens einer Ableitung mit dem Grenzwert verglichen und als Kriterium für die Qualität des Signals gewertet wird. So kann unterschieden werden, ob das Signal von einem zu berücksichtigenden Partikel oder von einem schlecht gemessenen Partikel erzeugt wird. Wenn zur Messung der Partikelabmessungen nur Signale genutzt werden, deren wenigstens eine Ableitung oberhalb eines Grenzwertes für die Flankensteilheit liegt, können zu langsam ansteigende Signale verworfen werden. Dabei kann sich die Analysevorrichtung auf sich mit der Zeit ändernde Partikeleigenschaften einstellen, wenn der Grenzwert in Abhängigkeit von dem gleitenden Durchschnitt der Flankensteilheit einer Anzahl zuvor detektierter Signale ermittelt wird.

Eine gute Auflösung der Meßwerte ergibt sich, wenn die Auswerteeinheit einen spannungsgesteuerten Oszillator umfaßt. Dabei kann bei kleinen Abmessungen eine feinere Auflösung erreicht werden, wenn der spannungsgesteuerte Oszillator so angesteuert wird, daß er eine über-die Dauer des auszuwertenden Signals abfallende Frequenz erzeugt. Ein einfacher mathematischer Zusammenhang ergibt sich, wenn die Frequenz mit einer Exponentialfunktion abfällt. Es kann aber auch gewünscht sein, daß die Frequenz mit einer Treppenfunktion abfällt.

Verschiedene Partikelgattungen können gleichzeitig gemessen werden, wenn die Amplitude des Signals zur Erkennung des Materials der Partikel ausgewertet wird. Die Amplitude ist, wenn der Strahlquerschnitt kleiner als der Partikel ist, im wesentlichen nur von den Reflexionseigenschaften der Partikel abhängig. Verschiedene Materialien können so erfaßt werden.

In der Zeichnung sind Ausführungsbeispiele der vorliegenden Erfindung dargestellt.

Es zeigen:
- Fig. 1:: Den fluidseitigen Kopf einer Sonde mit zwei optischen Fenstern, in einem Querschnitt von der Seite;
- Fig. 2:: den fluidseitigen Kopf einer Sonde mit einem planparallelen und einem konvexen Fenster, in einem Querschnitt von der Seite;
- Fig. 3:: den Intensitätsverlauf in Abstrahlrichtung, der mit der Konfiguration gemäß Figur 2 erreichbar ist;
- Fig. 4:: ein Blockschaltbild einer Auswertungseinheit für die erfindungsgemäße Analysevorrichtung; sowie
- Fig. 5:: ein Blockschaltbild zur Impulsflankenbewertung.

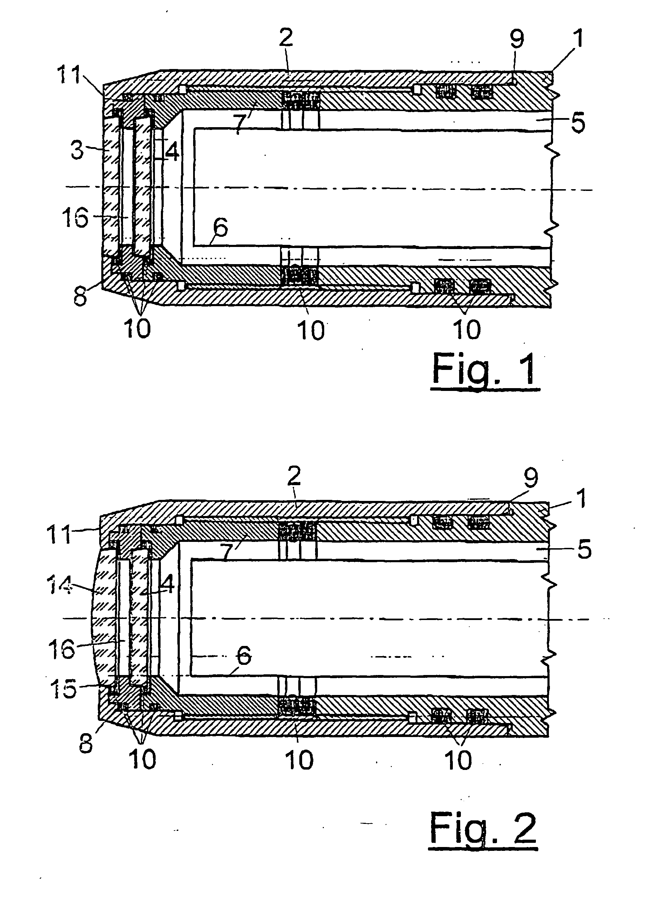

In der Figur 1 ist eine erfindungsgemäße Sonde mit einem Grundkörper 1, einer äußeren Hülse 2 sowie einem äußeren Fenster 3 und einem inneren Fenster 4 in einem Querschnitt dargestellt. Der Grundkörper 1 umgibt einen Innenraum 5 mit im wesentlichen rundem Querschnitt, in dem eine nur angedeutete optische Einrichtung 6 so angeordnet ist, daß sie um die Mittelachse der Sonde rotieren kann. An die Optik 6 schließt in Richtung auf die Fenster 3 und 4 hin ein etwa rohrförmiges Paßstück 7 an, das das Fenster 4 trägt. An das Fenster 4 und das Rohrstück 7 schließt in fluidseitiger Richtung ein weiteres, ringförmiges Paßstück 8 an, das das fluidseitige Fenster 3 trägt. Die Hülse 2 umgibt den Grundkörper 1, die Optik 6 sowie die Paßstücke 7 und 8 und die Fenster 3 und 4 nach außen hin. Dabei weist die Hülse 2 im wesentlichen den gleichen Durchmesser auf wie der Grundkörper 1, an dem die Hülse 1 in einem ringförmigen Bund 9 anliegt. Das Paßstück 7 ist mit den daran angrenzenden Komponenten in die Hülse 2 eingeschraubt, während die Hülse 2 wiederum auf den Grundkörper 1 aufgeschraubt ist. Die Dichtigkeit gegenüber dem zu messenden Fluid wird durch O-Ringe 10 gewährleistet.

An dem freien Ende ist die Hülse 2 konisch angeschrägt und endet in einer Stirnfläche 11, die kreisförmig und von geringerem Durchmesser ist als der Durchmesser der Hülse 2 im übrigen. Die Stirnfläche 11 der Hülse 2 ist bündig und in einer Ebene mit der fluidseitigen, planen Oberfläche des Fensters 3 angeordnet.

In der Figur 2 ist eine Sonde im Querschnitt dargestellt, die im wesentlichen der Sonde gemäß Figur 1 entspricht. Gleiche Bauelemente werden mit gleichen Bezugsziffern bezeichnet.

Bei diesem Ausführungsbeispiel ist ein fluidseitiges Fenster 13 mit einer konvexen fluidseitigen Oberfläche 14 vorgesehen. Das fluidseitige Fenster 13 ist an seiner dem Sondeninneren 5 zugewandten Oberfläche plan, ebenso wie das Fenster 4 beidseitig planparallel ist. Die Stirnseite 11 der Hülse 2 und die konvexe fluidseitige Oberfläche 14 des Fensters 13 grenzen in einem Ringbereich 15 aneinander an, in dem sie absatzlos ineinander übergehen. Die äußere Fläche 14 des Fensters 13 hebt sich jedoch in Richtung auf das Fluid über die Ebene der Stirnseite 11 hinaus.

In der Praxis erzeugt die Optik 6 einen parallel zur Mittenachse des Sondenkopfes orientierten Laserstrahl, der die Fenster 3 und 4 bzw. 13 und 4 durchtritt und außerhalb des Sondenkopfes in dem Fluid fokussiert ist. In diesem Fokuspunkt werden Partikel beleuchtet, die das Licht zurückstreuen. Das rückgestreute Licht durchtritt wiederum die Fenster 3 und 4 bzw. 13 und 4 und wird von der Optik 6 erfaßt und mit nachgeschalteter Elektronik ausgewertet.

Bei der Konfiguration gemäß Figur 1 kann ein achsparalleler Laserstrahl weitgehend in einem Punkt innerhalb des Fluides fokussiert werden, weil der Laserstrahl lediglich senkrecht zur Ausbreitungsrichtung angeordnete optische Flächen der Fenster 3 und 4 durchtreten muß. Wesentliche optische Verzerrungen treten hierdurch nicht ein. Diese Konfiguration ist also zu wählen, wenn eine möglichst punktgenaue Fokussierung gewünscht ist.

Demgegenüber durchtritt in der Figur 2 der achsparallele Laserstrahl die Fenster 4 und 13, wobei der Strahl an der Grenzfläche zwischen dem Fluid und der konvexen Oberfläche 14 in radialer Richtung auf die Mittenachse hin abgelenkt wird, während er in tangentialer Richtung im wesentlichen unbeeinflußt bleibt. Hierdurch ergibt sich ein Astigmatismus, in dem der Laserstrahl in Radialrichtung näher an dem Sondenkopf fokussiert wird als in tangentialer Richtung. Zwischen den beiden so entstehenden Stellen des engsten Streuquerschnittes weist der Abtaststrahl eine im wesentlichen konstante Intensität auf.

Bei Fluiden, die den Sensor umströmen und abrasive Partikel enthalten, weist die Anordnung gemäß Figur 2 gewisse Vorteile im Hinblick auf die Standzeit des fluidseitigen Fensters 13 auf. Die konvexe Oberfläche 14 des fluidseitigen Fensters 13 bewirkt, daß die Strömung des Mediums an der optischen Oberfläche 14 störungsfreier anliegt als die Strömung bei einem planen fluidseitigen Fenster. Die geringeren Verwirbelungen im Bereich der Oberfläche 14 sind der Grund dafür, daß die Ausführungsform gemäß Figur 2 in Gegenwart von abrasiven Partikel eine größere Standzeit aufweist.

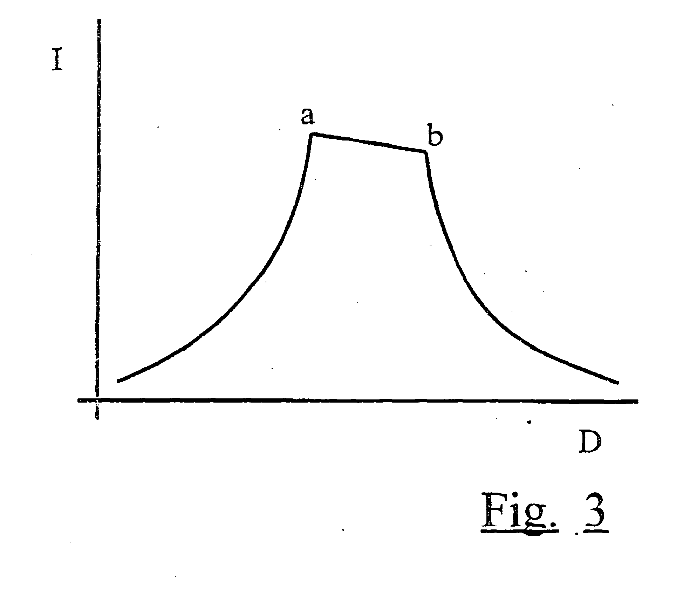

Ein entsprechender Strahlverlauf ist in der Figur 3 dargestellt. In diesem Diagramm ist die Strahlintensität I gegen den Abstand D von dem Sondenkopf aufgetragen. Die Strahlintensität steigt zunächst monoton bis zu einem Maximum a an, das bei dem ersten Brennpunkt des astigmatisch fokussierten Strahls liegt. Von dort fällt die Intensität nahezu gleichmäßig zu einem zweiten Punkt b ab, der mit dem Brennpunkt des Strahls in Tangentialrichtung zusammenfällt, also mit dem von dem Sondenkopf entfernt liegenden Brennpunkt. Von dort fällt die Intensität etwa hyperbelförmig ab. Der Bereich zwischen den Punkten a und b weist eine nahezu konstante Lichtintensität auf, was in der Praxis bedeutet, daß zwischen den Punkten a und b eine Art Tiefenschärfe erreicht wird, um Partikel in einer größeren Tiefenstaffelung innerhalb des Fluides ausmessen zu können. In einem Zahlenbeispiel werden die folgenden Parameter gewählt:

| | |
|---|---|
| Wellenlänge: | 780nm |
| Brechungsindex des Fensters 13: | 1,750 |
| Brechungsindex des Fluids: | 1,33 |
| Krümmungsradius der äußeren Oberfläche 14: | 38,55 mm |
| Brennweite der Linse: | 123 mm |
| Brennweite der Optik: | 15 mm |
| Strahldurchmesser an der Oberfläche 14: | 5 mm |
| Abstand des Strahls von der Mittenachse: | 5 mm |
| Minimaler Strahlquerschnitt im Fokuspunkt: | 0,75µm |
| Konstanz der Intensität zwischen den Punkten a und b: | ±2,33% |
| Abstand zwischen den Punkten a und b: | 0,37 mm |

Dieses Zahlenbeispiel zeigt, daß mit der Konfiguration gemäß Figur 2 eine im Verhältnis zum minimalen Strahlquerschnitt sehr lange Strecke von nahezu konstanter Lichtintensität erreicht werden kann.

Zwischen den Fenstern 3 und 4 bzw. 13 und 4 ist ein Zwischenraum 16 vorgesehen. Dieser Zwischenraum erfüllt eine Sicherheitsfunktion in dem Sinne, daß bei einer Undichtigkeit des fluidseitigen Fensters 3 bzw. 13 zunächst der Zwischenraum 16 mit dem Fluid gefüllt wird, bevor das Fluid in den Innenraum 5 der Sonde gelangen kann und dort die Optik 6 beschädigt. Außerdem wird auf diese Weise die Gefahr verringert, daß das Fluid bei einer Undichtigkeit im Bereich des Fensters 3 bzw. 13 durch den Sensor an die Umwelt abgegeben wird. Dies ist besonders bei giftigen Stoffen ein wesentliches Sicherheitsmerkmal, da Vorrichtungen zur Messung von Partikelgrößen beispielsweise in chemischen Reaktoren eingesetzt werden, um in so giftigen Medien wie Phosgen die Größenverteilungen zu messen.

Der erfindungsgemäße Sondenkopf mit den beiden hintereinander angeordneten und jeweils für sich fluiddichten Fenstern 3 und 4 bzw. 13 und 4 kann beispielsweise schon ein Warnsignal abgeben, wenn sich die optischen Eigenschaften durch in den Zwischenraum 16 eindringendes Fluid verändern. Diese Änderungen sind besonders groß, wenn das Fluid eine Flüssigkeit ist. Wenn das Fluid gasförmig ist, also einen Brechungsindex im Bereich von Luft hat, werden sich die optischen Eigenschaften nicht so weit ändern, daß ein Signal abgegeben wird. Für gasförmige Fluide ist es also vorteilhaft, wenn in dem Zwischenraum 16 ein für dieses Gas sensitiver Sensor angeordnet wird. Es kann natürlich auch ein Sensor für Flüssigkeiten vorgesehen sein, der unabhängig von der Änderung der optischen Eigenschaften das Eindringen von Flüssigkeit signalisiert und damit einen Alarm auslöst.

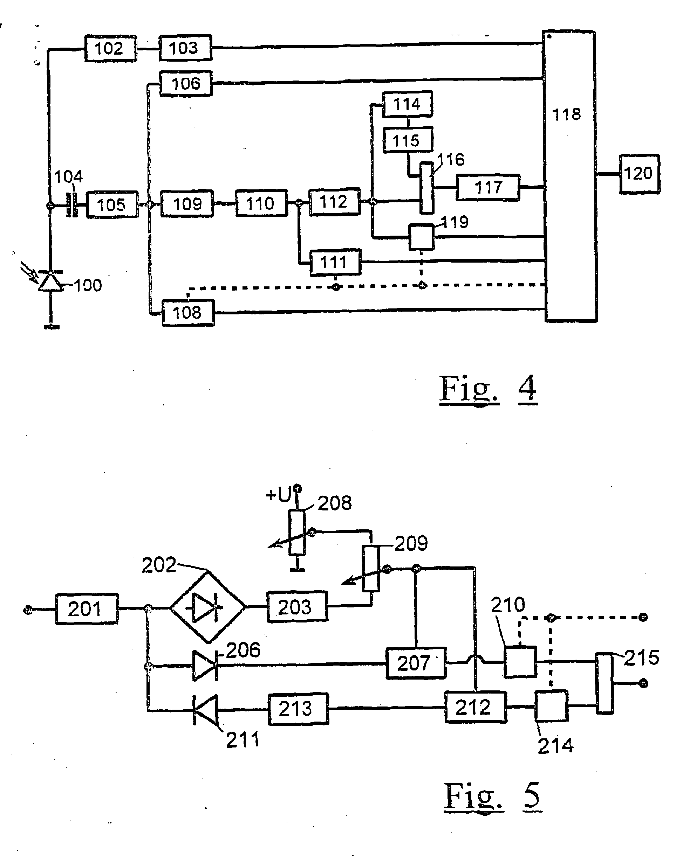

In der Fig. 4 ist ein Beispiel einer Auswertungseinheit als Blockschaltbild gezeigt.

Ein Photodetektor 100 erfaßt über das optische System das von den ausgeleuchteten Partikeln zurückgestreute Licht. Der Photodetektor 100 kann sowohl als Avalanche-Photodiode als auch als Photomultiplier ausgebildet sein. Die Wahl ist abhängig von der Laserwellenlänge der Beleuchtungseinrichtung von der spektralen Empfindlichkeit und dem Signal-Rausch-Abstand des Detektors. Der Photodetektor 100 wandelt das Streulichtsignal in ein proportionales elektrisches Signal, das in zwei verschiedene Signalzweige geleitet wird.

Der eine Zweig ist gleichspannungsgekoppelt und verstärkt das Signal in einem Verstärker 102, welcher eine lineare Kennlinie besitzt. Das verstärkte Signal wird in einer Glättungsschaltung 103 verarbeitet, welche aus dem stark fluktuierenden Gleichspannungssignal einen gleitenden Mittelwert erzeugt. Über die Zeitkonstante der Glättungsschaltung 103 kann die zeitliche Rückgrifflänge für die Mittelwertbildung eingestellt werden. Dieses geglättete Gleichspannungssignal ist ein Maß für das im Mittel rückgestreute Licht als Summe aus den Partikelsignalen und dem diffus streuenden Hintergrund und kann zur Charakterisierung des Partikelphasenanteils verwendet werden.

Der zweite Signalweg ist der Hauptsignalweg und ist, verdeutlicht über einen Kondensator 104, wechselspannungsgekoppelt. Dadurch werden in diesem Zweig nur die den Partikelimpulsen entsprechenden Wechselspannungsanteile des Signals weiterverarbeitet, während Gleichspannungsanteile unterdrückt werden. Das Partikelsignal wird zuerst in einem Vorverstärker 105 verstärkt. Der Vorverstärker 105 verringert den Dynamikbereich des Signals, ohne jedoch hohe Signalanteile zu begrenzen. Dazu ist der Vorverstärker 105 als logarithmischer Verstärker ausgeführt, der kleine Signalanteile höher verstärkt als große.

Dieses Signal wird im weiteren in drei verschiedenen Signalwegen bearbeitet.

In dem in der Fig. 4 oberen Signalweg wird eine zweite Glättungsschaltung 106 eingesetzt, die aus dem stark fluktuierenden Partikelsignal einen gleitenden Mittelwert bildet. Dieses Gleichspannungssignal ist ähnlich dem in der Glättungsschaltung 103 gebildeten Signal. Es enthält jedoch nicht den Signalanteil des diffus streuenden Hintergrundes und ist deshalb besser geeignet, das Meßgerät auf optimale Partikelmeßbedingungen einzustellen.

Der untere Signalzweig enthält eine sogenannte Sample-and-Hold-Schaltung 108, die den Spitzen- bzw. Scheitelwert eines jeden Partikelimpulses detektiert und diesen Wert solange speichert, bis er zum Zwecke einer Analog-Digital-Wandlung abgerufen oder zurückgesetzt wird. Die Schaltung 108 dient dazu, Amplitudenklassen zu bilden, denen die einzelnen Impulsscheitelwerte zugeordnet werden. Da nach dem Grundprinzip des Meßgerätes bei verwertbaren Partikelimpulsen der beleuchtende Laserstrahl im Querschnitt viel kleiner als der Querschnitt des beleuchteten Partikels ist, ist die Impulsscheitelhöhe vor allem eine Funktion der Reflektionseigenschaften der Partikel. Mit der Schaltung 108 ist es also möglich, Partikel aus verschieden reflektierenden Substanzen zu unterscheiden und so deren spezifische Abmessungsverteilung getrennt zu erfassen. Die erfaßten Häufigkeitsverteilungen werden getrennt nach zwei Eigenschaftskoordinaten differenziert in Klassen, den Reflektionseigenschafts- bzw. den Stoffklassen und den Abmessungsklassen, unterschieden. Das eröffnet die Möglichkeit, simultan Drei- und Vierphasensysteme zu vermessen und die einzelnen Verteilungen zu unterscheiden. Die konkrete Ausführung der Schaltung 108 kann auch auf andere Weise (z.B. eine Komparatorkette mit Spitzenwertdetektion) erfolgen. Da die Schaltung 108 eine speichernde Funktion besitzt, muß sie zu einem geeigneten Zeitpunkt zurückgesetzt werden.

Der mittlere Signalzweig realisiert die Abmessungsdiskretisierung und die Selektion der Partikelsignale in "gute" und "schlechte", also verwertbare und nicht verwertbare Signale. Dazu ist ein Filter 109 vorgesehen, das einen Tiefpaß realisiert und zur Verringerung des Signalrauschens dient. Dem Filter 109 ist ein weiterer Verstärker 110 nachgeschaltet, dessen lineare Verstärkung zur Anhebung kleiner Signalpegel dient. Große Signalpegel werden in dem Verstärker 110 auf die maximale Ausgangsspannung begrenzt. Nach dem Ausgang des Verstärkers 110 teilt sich der Signalweg abermals auf. Der obere Zweig realisiert die Umsetzung der Laufzeit des Partikelsignals in Partikelabmessungskanäle. Der untere Zweig umfaßt eine Schaltung 111 zur Partikelsignalflankenbewertung, die die Selektion nach verwertbaren und nicht verwertbaren Partikelsignalen vornimmt. Im oberen Signalzweig ist als erstes ein Fensterdiskriminator 112 angeordnet. Der Fensterdiskriminator 112 hat die Aufgabe, aus den Partikelsignalen mit mehr oder weniger steilen Flanken ein steiles Rechtecksignal zu erzeugen, welches nur noch die Partikelsignallaufzeit als charakteristische Information enthält. Der Fensterdiskriminator 112 erzeugt an seinem Ausgang ein positives Rechtecksignal, wenn an seinem Eingang durch das Partikelsignal eine bestimmte Spannung durch die ansteigende Flanke überschritten und eine bestimmte Spannung durch die abfallende Flanke wieder unterschritten wird. Der Fensterdiskriminator 112 stellt gewissermaßen einen Trigger mit genau einstellbarer Hysterese dar. Die beiden Spannungspegel werden so eingestellt, daß möglichst alle Partikelsignale erfaßt werden, aber das Grundrauschen sowie Welligkeiten im Partikelimpulsdach abgeschnitten werden. Es ist auch eine Ausführungsvariante denkbar, in der das untere Spannungsniveau dynamisch dem hochfrequenten Rauschpegel angepaßt wird. Dazu wäre zusätzlich ein Hochpaßfilter und eine Glättungs- bzw. Mittelwertbildungsschaltung erforderlich.

Das so gebildete Partikelimpulslaufzeitsignal wird einem Umsetzer zugeführt, welcher die Impulslaufzeit bestimmten Klassen oder Kanälen zuordnet, die entsprechend der Abtastgeschwindigkeit des Laserstrahls bestimmten Abmessungsklassen oder -kanälen entsprechen.

Aufgrund des großen erreichbaren dynamischen Meßbereiches von etwa vier Dekaden für die Partikelabmessung wäre eine äquidistante Klassenbildung unzweckmäßig. In der Partikelmeßtechnik ist es im allgemeinen üblich, Fraktionsklassen zu bilden, die im Feinkornbereich enger und im Grobkornbereich weiter sind. Am häufigsten werden geometrische Reihen verwendet, die eine logarithmische Unterteilung der Abmessungsachse gewährleisten. Bei diesen Forderungen ist die Verwendung eines klassischen A/D-Wandlers nicht möglich. Deshalb ist ein Umsetzer vorgesehen, der einen Funktionsgenerator 114, einen spannungsgesteuerten Oszillator 115, eine Torschaltung 116 und einen Zähler 117 umfaßt. Der spannungsgesteuerte Oszillator 115 erzeugt an seinem Ausgang eine Rechteckimpulsfolge, deren Frequenz proportional der durch den Funktionsgenerator 114 an seinem Steuereingang angelegten Spannung ist. Die Impulsfolge des Oszillators 115 wird solange über das Tor 116 in den Zähler 117 eingezählt, wie am zweiten Eingang des Tores 116 das Partikellaufzeitsignal anliegt. Der frequenzbestimmende Funktionsgenerator 114 kann an seinem Ausgang verschiedene Spannungsverläufe erzeugen. Hierdurch können als Meßergebnis verschiedene Fraktionsabstufungen erreicht werden. Im oben geschilderten Sinne wäre eine logarithmische Fraktionseinteilung zweckmäßig. Das wird dadurch erreicht, daß der Funktionsgenerator 114 einen exponentiell abfallenden Spannungsverlauf an seinem Ausgang erzeugt. Der Funktionsgenerator 114 muß in der vorliegenden Schaltung bei jedem Partikelsignal bei dem gleichen Spannungswert starten und den Spannungswert dann mit der gleichen Zeitfunktion reduzieren. Der Anfangsspannungswert bestimmt die Auflösung im Feinpartikelbereich und die Geschwindigkeit der exponentiellen Abnahme der Ausgangsspannung bestimmt die Fraktionszahl im gesamten Meßbereich. Um den Umsetzungsvorgang immer mit den gleichen Anfangsbedingungen zu beginnen, muß der Funktionsgenerator 114 durch die Vorderflanke des Partikellaufzeitsignales getriggert werden. In einer einfachen Ausführung des Exponentialfunktionsgenerators kann ein Kondensator mit einer kleinen Zeitkonstante geladen und dann mit einer entsprechend größeren Zeitkonstante über einen Widerstand entladen werden. Da die Ladezeit des Kondensators bei dieser Art des Exponentialfunktionsgenerators Bestandteil der Partikelsignallaufzeit wäre, käme es zu einer Verzerrung der Fraktionsteilung im Feinbereich. Wenn dieser Effekt störend ist, kann durch zwei parallele Funktionsgeneratoren Abhilfe geschaffen werden. Diese werden abwechselnd geladen bzw. zur Generierung der Exponentialfunktion benutzt. Dadurch steht immer ein auf den Startzustand geladener Funktionsgenerator zum Triggern bereit. Als Funktionsgenerator wäre z.B. auch ein programmierbarer digitaler Treppenfunktionsgenerator denkbar, der eine Exponentialfunktion durch stückweise konstante Spannungsverläufe annähert. Mit einem solchen Generator kann eine anwendungsspezifische, flexible Meßbereichseinteilung und Unterteilung vorgenommen werden, was neue Möglichkeiten der Partikelverteilungsmessung eröffnet.

Der Zählerstand des Zählers 117 wird nach Erkennen des Partikelendes und in Abhängigkeit vom Bewertungsstatus durch einen Mikrocontroller 118 übernommen. Das Ende des Partikellaufzeitsignals wird durch ein H/Lflankengetriggertes Flip-Flop 119 detektiert und dort solange dem Mikrocontroller zur Verfügung gestellt, bis dieser das Reset-Signal abgibt. Im Mikrocontroller 118 wird der Zählerstand unter Berücksichtigung eines Offsets, welcher im wesentlichen durch den selektierten Amplitudenkanal bestimmt wird, direkt als Adresse einer Speicherzelle benutzt, deren Zählerstand um jeweils eins erhöht wird. Das Meßergebnis liegt am Ende der Meßzeit in Form eines zweidimensionalen Datenfeldes vor und wird durch eine Datenkommunikationsleitung zu einem Computer 120 übertragen. Dort erfolgt die abschließende Datenauswertung und - präsentation.

Ein Meßzyklus beginnt mit dem Rücksetzen des Mikrocontrollers 118 durch den Computer 120. Dabei werden die Datenspeicher auf Null gesetzt, die Meßparameter wie z.B. die Meßzeit, die maximale Partikelzahl vom Computer 120 in den Mikrocontroller 118 übertragen und der Meßzyklus gestartet. Der Mikrocontroller 118 überwacht ständig die Statusleitung für die Erkennung des Endes des Partikellaufzeitsignals des Flip-Flops 119. Wird das Ende eins Partikelsignals erkannt, so wird das Statussignal der Flankenbewertungsschaltung 111 gelesen. Wird ein "schlechtes" Partikelsignal detektiert, so wird sofort ein Reset-Impuls ausgegeben, welcher die Auswertungsschaltung zurücksetzt und für die Auswertung des nächsten Partikelsignals freigibt. Wird ein "gutes" Partikelsignal detektiert, so wird nacheinander die Amplitudeninformation von der Sample-and-Hold-Schaltung 108 und der Zählerstand des Zählers 117 gelesen und der zugehörige Speicher um eins erhöht. Danach wird der Reset-Impuls ausgelöst. Gleichzeitig mit der Überwachung des Endes des Partikelsignals durch das Flip-Flop 119 werden der interne Timer und sonstige Abbruchkriterien wie maximale Partikelanzahl überwacht. Zeigt der Timerzählerstand oder ein anderes Abbruchkriterium das Ende der Messung an, so wird ein entsprechendes Statussignal zum Computer 120 zurückgegeben, der dann seinerseits die Datenübertragung der Zählerinhalte veranlaßt. Die Abfrage bzw. Wandlung der Spannungssignale aus der Glättungsschaltung 103 und der zweiten Glättungsschaltung 106 in dem Mikrocontroller 118 wird in einer zweiten Betriebsweise des Mikrocontrollers 118 durch den Computer 120 ausgelöst.

In der Fig. 5 ist schließlich ein Beispiel der Schaltung zur Impulsflankenbewertung im Blockschaltbild dargestellt.

Am Eingang der Impulsflankenbewertungsschaltung liegt das gefilterte, verstärkte und eventuell begrenzte Partikelsignal an. Dieses Signal wird einem Differenzierungsglied 201 zugeführt und dort differenziert. Am Ausgang des Differenzierungsgliedes 201 liegt eine Folge von positiven und negativen Impulsen an, die der Vorderflanke bzw. der Hinterflanke des Eingangssignals entsprechen. Die entstehende Impulshöhe ist jeweils proportional der maximalen Flankensteilheit.

Das differenzierte Signal wird in drei verschiedenen Signalwegen weiterverarbeitet. Der in der Darstellung gemäß Fig. 5 obere Signalweg umfaßt einen Präzisionsvollwellengleichrichter 202 zur Gleichrichtung der Impulsfolge und eine Glättungsschaltung 203, die aus der gleichgerichteten Impulsfolge ein gleitendes Mittelwertsignal bildet. Dieses Mittelwertsignal ist proportional zur mittleren Flankensteilheit der Partikelimpulse. Er ändert sich dynamisch in Abhängigkeit von den Reflektionseigenschaften der Partikel und paßt sich selbständig den Signalbildern verschiedener Materialien an. Mit dieser Eigenschaft ist das Signal als Bezugsgröße für eine relative Flankensteilheitsbewertung prädestiniert.

Der mittlere Signalweg umfaßt einen Präzisionshalbwellengleichrichter 206, der nur die positiven Impulse der Partikelvorderflanken durch läßt. Diese Impulsfolge wird auf einen Komparator 207 geführt, wo sie mit einem Spannungswert verglichen wird, der aus einem mit einem Potentiometer 209 einstellbaren Anteil einer Konstantspannungsquelle 208 und dem Signal der Glättungsschaltung 203, die dem gleitenden Mittelwert entspricht, gebildet wird. Überschreitet die Impulshöhe des augenblicklichen Vorderflankenimpulses den angelegten Vergleichswert, so wird ein Speicher-Flip-Flop 210 umgeschaltet.

Der untere Signalweg entspricht dem mittleren Signalweg, dient jedoch zur Bewertung der Partikelhinterflanken. Dazu ist ein Präzisionshalbwellengleichrichter 211 vorgesehen, der nur die den Partikelhinterflanken entsprechenden negativen Impulse durchläßt. Damit die negativen Impulse in einem Komparator 212 gegen eine positive Spannung verglichen werden können, ist noch ein Inverter 213 mit einer Spannungsverstärkung von eins zwischengeschaltet. Der Ausgang des Komparators 212 ist ebenfalls auf ein Speicher-Flip-Flop 214 geschaltet, welches umschaltet, wenn die lmpulsamplitude größer als die Vergleichsspannung ist.

Die Ausgänge der beiden Speicher-Flip-Flops 210 und 214 werden über eine UND-Schaltung 215 logisch miteinander verknüpft, so daß nur dann ein H-Pegel am Ausgang der UND-Schaltung 215 anliegt, wenn beide Partikelsignalflanken als "gut" bewertet wurden. Dieser Bewertungsstatus bleibt solange erhalten, bis das Reset-Signal die Flip-Flops 210 und 214 zurücksetzt.

Diese besondere Art der Partikelflankenbewertung ermöglicht es dem Meßgerät, sich selbständig auf sich verändernde Meßbedingungen bzw. auf andere Meßsubstanzen einzustellen.

## Patentansprüche

1. Vorrichtung zum Analysieren von Partikelabmessungen in einem Fluid enthaltener Partikel,
mit einer Beleuchtungseinrichtung zur Beleuchtung der zu analysierenden Partikel, die eine Quelle zur Erzeugung von Licht umfaßt,
mit einem zwischen der Quelle und dem Fluid angeordneten optischen System,
mit einer Detektoreinrichtung zur Erfassung des von den Partikeln gestreuten Lichts und zur Erzeugung eines von dem gestreuten Licht abhängigen elektrischen Signals, mit einem zwischen dem Fluid und der Beleuchtungseinrichtung und optional der Detektoreinrichtung vorgesehenen Gehäuse, sowie mit einer Auswerteeinheit zur Ermittlung der Abmessung und/oder der Abmessungsverteilung der Partikel,
**dadurch gekennzeichnet, daß** das optische System wenigstens zwei hintereinander angeordnete, für das Licht durchlässige Fenster umfaßt, die jeweils fluiddicht in das Gehäuse eingesetzt sind, wobei zwischen den Fenstern ein Zwischenraum vorgesehen ist.

2. Vorrichtung nach Anspruch 1, **dadurch gekennzeichnet, daß** in dem Zwischenraum ein Sensor für das Fluid angeordnet ist.

3. Vorrichtung nach einem der vorhergehenden Ansprüche,
**dadurch gekennzeichnet, daß** zumindest die fluidseitige Oberfläche des fluidseitigen Fensters konvex ist.

4. Vorrichtung nach Anspruch 3, **dadurch gekennzeichnet, daß** der Fokusbereich zu den Hauptebenen des Strahls im wesentlichen spiegelsymmetrisch ist und in jeder Ebene eine etwa hyperbelförmige Erzeugende aufweist.

5. Vorrichtung nach einem der vorhergehenden Ansprüche 3 oder 4, **dadurch gekennzeichnet, daß** die Orte des geringsten Querschnittes in den Hauptebenen des Strahls in der Längsrichtung des Strahls gegeneinander verschoben sind.

6. Vorrichtung nach einem der vorhergehenden Ansprüche 3 bis 5, **dadurch gekennzeichnet, daß** der Fokusbereich zwischen den Stellen des geringsten Querschnitts eine annähernd konstante Lichtintensität aufweist.

## Claims

1. Apparatus for analysing particle dimensions of particles contained in a fluid,
with an illuminating device for illuminating the particles to be analysed, which comprises a source for generating light,
with an optical system arranged between the source and the fluid,
with a detection device for detecting the light scattered by the particles and for generating an electric signal dependent on the scattered light, with a housing provided between the fluid and the illuminating device and optionally the detection device, and
with an evaluation unit for determining the dimension and/or the dimensional distribution of the particles, **characterised in that** the optical system comprises at least two windows arranged one behind the other and transparent to light, which are each inserted into the housing in a fluid-tight manner, wherein a spacing is provided between the windows.

2. Apparatus according to Claim 1, **characterised in that** a sensor for the fluid is arranged in the spacing.

3. Apparatus according to any one of the preceding claims, **characterised in that** at least the fluid-side surface of the fluid-side window is convex.

4. Apparatus according to Claim 3, **characterised in that** the focus range is substantially mirror-symmetrical to the principal planes of the beam and has an approximately hyperbolic generatrix in each plane.

5. Apparatus according to any one of the preceding claims 3 or 4, **characterised in that** the sites of the smallest cross-section in the principal planes of the beam are displaced relative to one another in the longitudinal direction of the beam.

6. Apparatus according to any one of the preceding claims 3 to 5, **characterised in that** the focus range between the locations of the small cross-section has an almost constant light intensity.

## Revendications

1. Dispositif pour analyser des dimensions de particules de particules contenues dans un fluide,
comprenant un dispositif d'éclairage pour éclairer les particules à analyser, qui englobe une source de production de lumière,
comprenant un système optique agencé entre la source et le fluide,
comprenant un système de détecteur destiné à relever la lumière dispersée par les particules et à produire un signal électrique fonction de la lumière dispersée, comprenant un carter prévu entre le fluide et le dispositif d'éclairage et, de manière optionnelle, le dispositif de détecteur, et
comprenant également une unité de traitement de données pour la détermination de la dimension et/ou de la répartition des dimensions des particules,
**caractérisé en ce que** le système optique comprend au moins deux fenêtres, perméables à la lumière, agencées l'une derrière l'autre, qui sont insérées chacune dans le carter de manière étanche au fluide, un espace intermédiaire étant prévu entre les fenêtres.

2. Dispositif selon la revendication 1, **caractérisé en ce que** dans l'espace intermédiaire est agencé un détecteur pour le fluide.

3. Dispositif selon l'une des revendications précédentes, **caractérisé en ce qu'**au moins la surface côté fluide de la fenêtre située du côté du fluide, est convexe.

4. Dispositif selon la revendication 3, **caractérisé en ce que** la zone focale est sensiblement symétrique par rapport aux plans principaux du rayon, et présente dans chaque plan une génératrice de forme hyperbolique.

5. Dispositif selon l'une des revendications précédentes 3 ou 4, **caractérisé en ce que** les lieux de la section transversale la plus faible dans les plans principaux du rayon sont mutuellement décalés les uns par rapport aux autres dans la direction longitudinale du rayon.

6. Dispositif selon l'une des revendications précédentes 3 à 5, **caractérisé en ce que** la zone focale présente, entre les lieux de la section transversale la plus faible, une intensité lumineuse approximativement constante.
